# EUROPEAN PATENT SPECIFICATION

(11) **EP 4 589 780 B1**
(45) Date of publication and mention of the grant of the patent: **02.12.2026**
(21) Application number: 23864777.0
(22) Date of filing: 15.09.2023
(51) Int. Cl.: H01R 4/62, H01R 4/18, H01R 4/02, H01R 11/12, H01R 13/03, H01R 43/16, H01R 11/05, B32B 15/01, C22C 9/01

(54) **NOVEL COPPER-ALUMINUM COMPOSITE TERMINAL**
NEUARTIGES KUPFER-ALUMINIUM-VERBUNDENDGERÄT
NOUVELLE BORNE EN COMPOSITE CUIVRE-ALUMINIUM

(30) Priority: 16.09.2022 CN 202211130190
(43) Date of publication of application: 23.07.2025
(73) Proprietor: Changchun Jetty Automotive Technology Co., Ltd., Changchun City, Jilin Province 130000 (CN)
(72) Inventor: WANG, Chao, Changchun, Jilin 130000 (CN)
(74) Representative: Habermann, Hruschka & Schnabel
(86) International application number: PCT/CN2023/118981
(87) International publication number: WO 2024/056047

(56) References cited:
- EP-A1- 2 621 022
- CN-A- 105 742 850
- CN-A- 115 579 653
- CN-A- 115 954 689
- CN-U- 2 079 813
- CN-U- 205 429 187
- CN-U- 207 320 365
- CN-U- 212 209 790
- CN-U- 216 085 394
- CN-Y- 201 146 256
- CN-Y- 201 146 256
- JP-A- 2012 160 318
- JP-A- S53 122 790
- US-A1- 2015 079 825

## Description

### RELATED APPLICATION

The present disclosure claims priority of the Chinese Patent Application NO. 202211130190.X, an invention title of "novel copper-aluminum composite terminal", and filed on September 16, 2022.

### TECHNICAL FIELD

The present disclosure relates to the technical field of electrical connection, and particularly to a novel copper-aluminum composite terminal.

### BACKGROUND

With the increasing use of electrical connection terminal, pure copper terminal or copper-aluminum terminal has become commonly used wiring terminals. In the traditional field of electrical connection technologies, both the wiring terminal and the cable conductor are made of copper or copper alloy. On one hand, the price of copper continues to rise due to the reserve base of copper, which ultimately leads to the increase in the cost of cables. On the other hand, the large mass of copper itself also limits the realization of lightweight cables.

For this reason, a conductive material having a relatively large storage capacity and a relatively light weight, such as aluminum or aluminum alloy, has been used as a cable conductor material to realize the lightweight of cables. However, due to the large electrode potential difference between copper and aluminum, when a copper terminal is directly connected to a conductor of an aluminum cable, galvanic corrosion may occur between copper and aluminum under the action of air and water, and the conductor of the aluminum cable is vulnerable to corrosion, resulting in the increase of a contact resistance in a copper-aluminum connection area, and then serious consequences may occur in the electrical connection, such as a functional failure of an electrical connector, fire and so on.

CN205429187U discloses a copper-aluminum wiring terminal, comprising an integrally formed aluminum body; one end of the aluminum body forms a terminal plate, which is a flat structure with a through hole formed on its surface; the other end of the aluminum body forms a wiring cavity, which is a concave cavity with an opening facing away from the terminal plate; at least one surface of the terminal plate is tightly provided with a first copper layer adapted to the surface of the terminal plate, and the inner wall surface of the through hole is tightly provided with a second copper layer adapted to the inner wall surface.

CN201146256Y discloses a copper-aluminum transition terminal block, which includes an aluminum tube at the rear and an aluminum wiring board at the front. The aluminum tube at the rear features a blind hole, and the aluminum tube and the aluminum wiring board are of an integrated structure. Both the upper and lower surfaces of the aluminum wiring board at the front are explosion-welded with copper sheets. Due to the use of explosion welding between the copper plate and the aluminum plate, the composite strength is high, the contact resistance is low, and the conductivity is good.

EP2621022A1 discloses a pipe i.e. copper plated aluminum pipe, which comprises an aluminum layer in an end region of the pipe at an inner side and a copper layer at an outer side. The aluminum layer and the copper layer are connected with each other, where the copper layer lies in another end region that is compressed to form contact ends of a cable shoe. A tubular receiver is formed with an aluminum cable by the former end region, which is partly lined with the aluminum layer. The aluminum layer is removed from a front region of the tubular receiver. Independent claims are also included for the following: a cable shoe an electric connector a plastic plug for closing a tubular receiver of a cable shoe.

To prevent corrosion at copper-aluminum junctions, JP S53 122790 A discloses a method, specifically: nickel is directly electroplated on the junction surfaces, and copper, silver, tin or solder is further plated thereon as required, so as to strengthen the bonding between the plated layer and aluminum.

US20150079825A1 discloses a terminal-provided wire includes a wire with a core whose end is exposed, and a terminal crimped to the end of the core and connectable to a mating side. The terminal includes a front terminal portion and a rear terminal portion. The front terminal portion includes an auxiliary crimping portion to be placed on the bottom plate portion in such a manner as to be sandwiched between the bottom plate portion and the core and to be crimped to the core together with the wire barrel portions to partly highly compress the core, a fixing portion to be fixed to the fixing portion and a connecting portion extending in the axial direction from the fixing portion.

In order to improve the stability of electrical conductivity between wires, the wiring terminals used are all made of aluminum alloy, which is similar to the material of the wires. Although this can meet the needs of use to a certain extent, the structural strength of aluminum alloy is relatively low, the high temperature resistance and the corrosion resistance are relatively poor, and the overload resistance is relatively insufficient. In addition, the quite different structures of the wiring terminals cause great differences in the current distribution in the wiring terminals, which leads to relatively poor electrical conductivity, stability and reliability of the aluminum alloy terminals currently used, thereby seriously affecting the reliability and the stability of the electric line connection. Therefore, in view of the current situation, it is urgent to develop a brand-new copper-aluminum composite terminal to meet the needs of practical use.

### SUMMARY

An objective of the present disclosure is to provide a new technical solution of a novel copper-aluminum composite terminal.

The present disclosure provides a novel copper-aluminum composite terminal, which electrically connects an aluminum cable to an electric device and serves to conduct current, in which the copper-aluminum composite terminal includes a connecting part and a functional part which are connected to each other, the connecting part is made of aluminum, the functional part is composed of a copper layer and an aluminum layer, the connecting part is connected to a conductive portion of the aluminum cable, and the copper layer of the functional part is connected to the electric device.

According to the invention, the copper layer and the aluminum layer are laminated and welded into a single structure.

Additionally, there are two copper layers, and each of the two copper layers is disposed on one side of the aluminum layer, and the copper layers are superposed and welded together with the aluminum layer.

Optionally, the copper layer and the aluminum layer are welded by means of diffusion welding, pressure welding, accumulative roll bonding, electromagnetic welding, ultrasonic welding, or explosive welding.

Optionally, a thickness of the copper layer accounts for 0.1% to 100% of a thickness of the aluminum layer.

Optionally, the aluminum layer is connected to the connecting part, and the copper layer is connected to the electric device.

Optionally, an overlapping area of the aluminum layer and the connecting part accounts for 5% to 100% of an overlapping area on the connecting part's interface with the aluminum layer.

According to an example, the copper layer and the aluminum layer are in butt-jointed with the connecting part, with a welding seam disposed between the connecting part and the functional part, and the copper layer is connected to the electric device.

Optionally, at least a surface of the aluminum layer is provided with a plating layer.

Optionally, the material of the plating layer includes one or more materials selected from the group consisting of zinc, nickel, copper, tin, gold, silver, cadmium, manganese, zirconium, cobalt, titanium, chromium, tin-lead alloy, silver-antimony alloy, palladium, palladium-nickel alloy, graphite silver, graphene silver and silver-gold-zirconium alloy.

According to the invention, one of the connecting part and the functional part is provided with a recess, and the other is provided with a protrusion matched with the recess for mounting.

The recess and the protrusion are connected by means of welding or conductive adhesive bonding.

Optionally, the functional part is shaped as a flat plate, and the flat plate is provided with a through hole or a threaded hole.

Optionally, the functional part is shaped as a cylinder, and the copper layer is at least located inside the cylinder.

Optionally, the cylinder is provided with at least one slot in a longitudinal direction.

Optionally, the connecting part is a flat plate structure or a cylindrical structure or a U-shaped open structure or a V-shaped open structure.

Optionally, the connecting part and the conductive portion of the aluminum cable are connected by means of crimping or welding or bonding or riveting.

Optionally, a copper-aluminum transition layer is disposed between the copper layer and the aluminum layer.

Optionally, the copper-aluminum transition layer includes a copper-aluminum solid solution not less than 6.5wt%.

Optionally, the copper-aluminum transition layer includes a copper-aluminum compound not more than 50.5 wt %.

The present disclosure achieves the following technical effects:

The connecting part is made of aluminum, which can effectively avoid the galvanic corrosion occurring between the copper-aluminum composite terminal and the aluminum cable when being connected to the aluminum cable, and significantly improve the service life of the terminal. In addition, the connecting part is made of aluminum, which can achieve the purpose of weight reduction and the effect of cost saving.

The snap-fit structure is disposed between the connecting part and the functional part. On one hand, this structure increases the contact area between the connecting part and the functional part, reduces the resistance and improves the conduction effect. On the other hand, the snap-fit also increases the bonding force between the connecting part and the functional part, so that the strength of the copper-aluminum terminal is higher, thereby improving the electrical and mechanical properties of the copper-aluminum terminal.

The aluminum layer of the functional part is conductive adhesive to or welded with the connecting part, and complicated connection processing and strict sealing mode are not needed, which reduces the process requirements and improves the production efficiency.

### BRIEF DESCRIPTION OF THE DRAWINGS

The drawings, which are incorporated in and constitute a part of the specification, illustrate the embodiments of the present disclosure and together with the description, serve to explain the principles of the present disclosure.
FIG. 1 illustrates a structural diagram of a copper-aluminum composite terminal according to an example of the present disclosure;
FIG. 2 illustrates a front view of a copper-aluminum composite terminal according to an example of the present disclosure;
FIG. 3 illustrates a cross-sectional view taken along line A-A in FIG. 2;
FIG. 4 illustrates a cross-sectional view of a copper-aluminum composite terminal according to another example of the present disclosure;
FIG. 5 illustrates a structural diagram of a copper-aluminum composite terminal according to another embodiment of the present disclosure;
FIG. 6 illustrates a structural diagram of a connecting part of a copper-aluminum composite terminal in FIG. 5;
FIG. 7 illustrates a structural diagram of a functional part of a copper-aluminum composite terminal in FIG. 5;
FIG. 8 illustrates a structural diagram of a copper-aluminum composite terminal according to an example of the present disclosure;
FIG. 9 illustrates a structural diagram of a copper-aluminum composite terminal according to an example of the present disclosure; and
FIG. 10 illustrates an electronic image of a copper-aluminum transition layer of the present disclosure.

Description of main reference numerals:
1: connecting part; 2: functional part; 3: aluminum cable; 4: recess; 5: protrusion; 6: through hole; 7: slot; 21: copper layer; 22: aluminum layer.

### DETAILED DESCRIPTION OF THE EMBODIMENTS

Various exemplary embodiments of the present disclosure are described in detail with reference to the drawings. It should be noted that the relative arrangements, numerical expressions and numerical values of components and steps set forth in these embodiments do not limit the scope of the present disclosure unless otherwise specified.

The following description of at least one exemplary embodiment is merely illustrative in nature and is in no way intended to limit the present disclosure and applications or uses thereof.

Techniques, methods and devices known to those of ordinary skill in the relevant fields may not be discussed in detail, but they should be regarded as parts of the specification under appropriate circumstances.

In all the examples illustrated and discussed here, any specific value should be construed as merely illustrative and not as a limitation. Therefore, other examples of the exemplary embodiments may have different values.

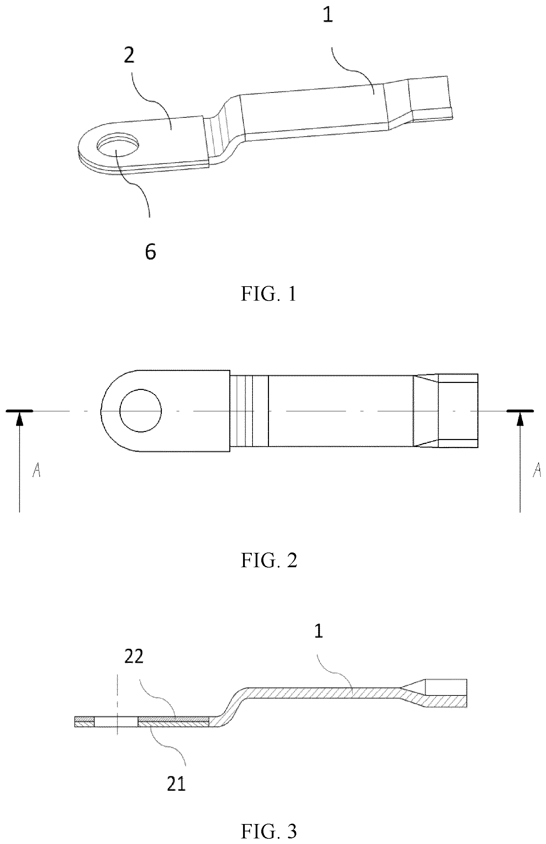

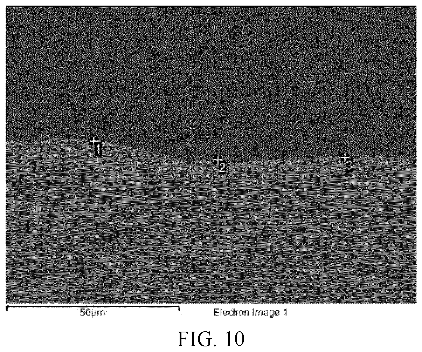

A novel copper-aluminum composite terminal, as illustrated in FIGS. 1 to 10, electrically connects an aluminum cable 3 and an electric device and plays a role of current conduction. The copper-aluminum composite terminal includes a connecting part 1 and a functional part 2 which are connected to each other, the connecting part 1 is made of aluminum, the functional part 2 is composed of a copper layer 21 and an aluminum layer 22, the connecting part 1 is connected to a conductive portion of the aluminum cable 3, and the copper layer 21 of the functional part 2 is connected to the electric device.

The connecting part 1 is made of aluminum, and the functional part 2 is made of a copper-aluminum composite material and includes the copper layer 21 and the aluminum layer 22. The connecting part 1 and the functional part 2 may be connected by means of snap fitting, welding, or conductive adhesive bonding.

In an example, as illustrated in FIGS. 1 to 3 and 8, the functional part 2 is in butt-jointed with the connecting part 1, the functional part 2 includes a copper layer 21 and an aluminum layer 22 which are laminated and welded into a single structure. The connecting part 1 is connected to the conductive portion of the aluminum cable 3, and the functional part 2 is connected to the electric device. Specifically, the copper layer 21 in the functional part 2 is electrically connected to the electric device.

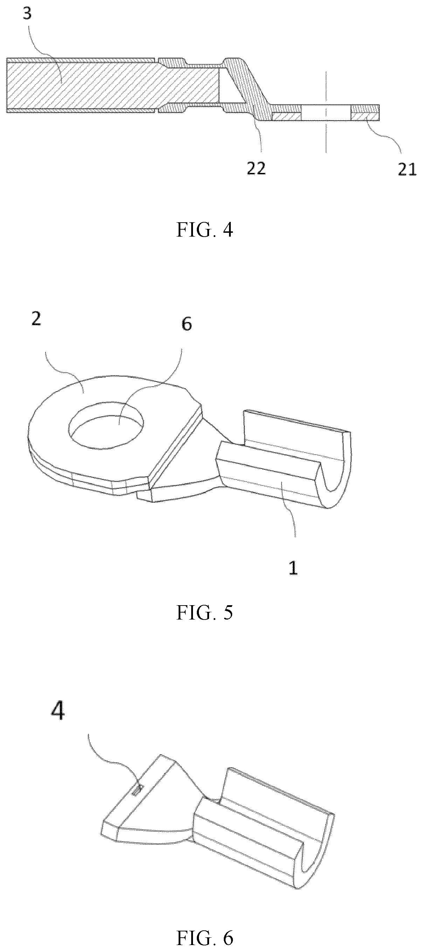

In another embodiment, as illustrated in FIGS. 5 to 8, the functional part 2 is in lap connection with the connecting part 1, the functional part 2 includes a copper layer 21 and an aluminum layer 22 which are laminated and welded into a single structure. The connecting part 1 is connected to the conductive portion of the aluminum cable 3, and the functional part 2 is connected to the electric device. Specifically, the copper layer 21 in the functional part 2 is electrically connected to the electric device.

In the field of electrical connections, the conventional terminal at present is integrally made of a copper material, and the copper terminal is connected to the aluminum cable by direct mechanical crimping or welding, so that the problem of galvanic corrosion is easy to occur. According to the present disclosure, the connecting part 1 is made of aluminum or aluminum alloy, when the connecting part 1 is connected to the aluminum cable, the problem of galvanic corrosion between the terminal and the aluminum cable can be effectively avoided, and the service life of the terminal can be significantly prolonged. In addition, making the connecting part 1 with aluminum or aluminum alloy can achieve the purpose of weight reduction and the effect of cost saving.

To sum up, the aluminum layer 22 of the functional part 2 is crimped or welded with the connecting part 1, and complicated connection processing and strict sealing mode are not needed, which reduces the process requirements and improves the production efficiency. In addition, since it is no longer necessary to process copper and aluminum in such ways as fusion welding, friction welding, ultrasonic welding, cold pressure welding, electron beam welding, explosive welding, etc., the processing cost of the terminal can be effectively reduced, thereby reducing the cost of the overall electrical connection.

Further, the functional part 2 is composed of the copper layer 21 and the aluminum layer 22. The copper-aluminum composite terminal used at present generally adopts a method of plating layer copper on the aluminum layer 22, but the copper layer 21 is prone to detachment during the actual use. The functional part 2 of the present disclosure is formed by welding the copper layer 21 and the aluminum layer 22 into a whole, which ensures that during use, the electrical connection performance is more stable, the copper layer 21 is resistant to wear and detachment, and the service life is longer.

In some embodiments, as illustrated in FIGS. 3 and 4, the copper layer 21 and the aluminum layer 22 are laminated and welded into a single structure.

The copper layer 21 and the aluminum layer 22 are connected by welding. Under the effect of welding, copper atoms and aluminum atoms in the copper layer 21 and the aluminum layer 22 penetrate or combine with each other under the effect of pressure to form a copper-aluminum transition layer, thereby not only avoiding the galvanic corrosion between copper and aluminum, but also improving the electrical and mechanical properties of the copper-aluminum connection, so that the mechanical and electrical properties of the copper-aluminum composite terminal are significantly improved.

Instead of the conventional copper material at present, the copper-aluminum composite terminal of the present disclosure is prepared as the wiring terminal, so that galvanic corrosion between copper and aluminum is avoided, and the service life of a joint is significantly prolonged by at least 20%.

The aluminum layer 22 of the copper-aluminum composite material is connected to the connecting part 1 by welding, so that the processing mode is simple, the process requirements are reduced, the production efficiency is improved, and the cost of the overall electrical connection is reduced.

More specifically, the copper layer 21 and the aluminum layer 22 of the copper-aluminum composite material may be connected by diffusion welding. The copper layer 21 and the aluminum layer 22 are stamped, and the copper atoms and the aluminum atoms penetrate each other and form a firm metal bond under the effect of pressure, thereby not only avoiding the galvanic corrosion between copper and aluminum, but also improving the electrical and mechanical properties of the copper-aluminum connection, so that the mechanical and electrical properties of the copper-aluminum composite terminal are significantly improved.

In an embodiment, there are two copper layers 21, which are respectively disposed on two sides of the aluminum layer 22, and the two copper layers 21 are superposed and welded together with the aluminum layer 22.

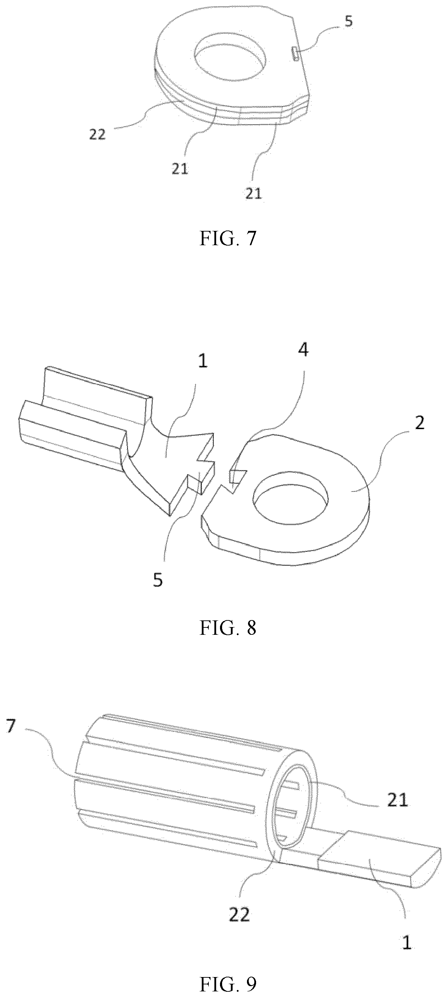

As illustrated in FIG. 7, the copper layers 21 is disposed on the upper and lower sides of the aluminum layer 22. This structure can ensure that during the lap connection between the copper-aluminum composite terminal and the electric device, both the upper layer and the lower layer of the copper-aluminum composite terminal can be electrically connected to the electric device without distinguishing the copper layer 21 and the aluminum layer 22. Specifically, the functional part 2 is provided with a through hole for connection with the electric device, and a stud is used for electrical connection with the electric device through the through hole 6. The stud may be electrically connected to the copper layer 21 of the functional part 2 on one side, and the electric device is also electrically connected to the copper layer 21 on the other side. This structure can completely avoid the galvanic corrosion between copper and aluminum, and achieve good electrical conductivity and a long service life.

The copper layer 21 and the aluminum layer 22 are welded by means of diffusion welding, pressure welding, accumulative roll bonding, electromagnetic welding, ultrasonic welding, or explosive welding.

The diffusion welding is a welding method in which two workpieces to be welded are tightly pressed together, and the atoms of the workpieces are in mutual diffusion to form metallurgical connection through heating and thermal preservation. The advantages are that the workpieces are not overheated and not melted, the quality of the welded joint is high, and the workpiece with a large area can be welded, additionally, the workpieces can be welded with a high welding precision and a small deformation.

The pressure welding is a method of applying a pressure to the workpieces to be welded, causing the joint surfaces to be in close contact, so as to produce certain plastic deformation to complete the welding. The pressure applied in the accumulative roll bonding is different from the pressure applied in the pressure welding. The pressure is applied by a pressing block in the pressure welding, but the pressure is applied by a roller in the accumulative roll bonding.

The electromagnetic welding uses instantaneous current to produce a strong magnetic field, so that the workpieces to be welded are welded together under the effect of a magnetic field force. The advantages are that the electromagnetic welding is non-contact welding, with a high welding speed, a small internal stress and a high processing precision.

The ultrasonic welding transmits high-frequency vibration waves to the surfaces of two objects to be welded, so that under pressure, the surfaces of the two objects rub against each other to achieve a fusion between molecular layers.

The explosive welding is a welding method which causes rapid collision of workpieces using an impact generated by an explosive explosion, thereby achieving a welded join. In such welding, the metal is subjected to high velocity impact due to the shock waves of the explosives explosion, and is combined in a very short metallurgical process.

In an embodiment, a thickness of the copper layer 21 accounts for 0.1% to 100% of a thickness of the aluminum layer 22.

In order to verify the influence of a ratio of the thickness of the copper layer 21 to the thickness of the aluminum layer 22 on a voltage drop and a tensile strength, the inventor selects 17 groups of samples of the copper-aluminum composite terminals with the same cross-sectional area and different thickness ratios to test the voltage drop and the tensile strength of the copper-aluminum composite terminal. The test results are shown in Table 1.

In this embodiment, when the voltage drop across the two ends of the copper-aluminum transition terminal is greater than 4 mV, it is considered unqualified.

The test method of the tensile strength of the copper-aluminum composite terminal: both ends of the sample of the copper-aluminum composite terminal are fixed on tensile fixtures of a universal tensile tester, and the sample is stretched at a speed of 50 mm/min. A tensile value is recorded when the sample is finally broken. In this embodiment, the tensile force value greater than 1600 N is a qualified value.

**Table 1: The influence of a ratio of the thickness of the copper layer 21 to the thickness of the aluminum layer 22 on a voltage drop (mV) and a tensile strength (N)**

| Ratio of the thickness of the copper layer to the thickness of the aluminum layer | | | | | | | | | | | | | | | | |
|---|---|---|---|---|---|---|---|---|---|---|---|---|---|---|---|---|
| 0.02 | 0.05 | 0.1 | 0.5 | 1 | 5 | 10 | 15 | 25 | 35 | 45 | 55 | 70 | 85 | 100 | 115 | 130 |

| Voltage drop (mV) | | | | | | | | | | | | | | | | |
|---|---|---|---|---|---|---|---|---|---|---|---|---|---|---|---|---|
| 3.9 | 3.8 | 3.6 | 3.4 | 3.2 | 3.3 | 3.4 | 3.5 | 3.5 | 3.6 | 3.7 | 3.7 | 3.8 | 3.8 | 3.9 | 4.2 | 4.3 |

| Tensile strength (N) | | | | | | | | | | | | | | | | |
|---|---|---|---|---|---|---|---|---|---|---|---|---|---|---|---|---|
| 1530 | 1570 | 1650 | 1720 | 1823 | 1880 | 1941 | 1980 | 2000 | 2026 | 2080 | 2160 | 2180 | 2255 | 2300 | 2390 | 2430 |

As can be seen from the data in the above table, when the ratio of the thickness of the copper layer 21 to the thickness of the aluminum layer 22 is less than 0.1, the tensile strength is less than 1600 N, which is unqualified. When the ratio of the thickness of the copper layer 21 to the thickness of the aluminum layer 22 is greater than 100, the voltage drop is greater than 4 mV, which is unqualified. Therefore, the inventor sets the ratio of the thickness of the copper layer 21 to the thickness of the aluminum layer 22 to be between 0.1% and 100%.

In an embodiment, the aluminum layer 22 is connected to the connecting part 1, and the copper layer 21 is connected to the electric device.

When the copper-aluminum composite terminal is connected to the electric device, as illustrated in FIGS. 3 and 5, since the connecting part 1 is made of aluminum and the electric device is generally made of copper, in order to ensure the stability of the electrical connection and avoid a potential difference, the aluminum layer 22 is connected to the connecting part 1 and the copper layer 21 is connected to the electric device.

In an embodiment, specifically, as illustrated in FIGS. 3 and 4, the copper layer 21 and the aluminum layer 22 are connected to the connecting part 1, and the copper layer 21 is connected to the electric device.

In some embodiments, an overlapping area of the functional part 2 and the connecting part 1 accounts for 5% to 100% of an overlapping area on the connecting part 1's interface with the functional part 2.

With time elapses, the overlapping area of the connection between the functional part 2 and the connecting part 1 leads to an increase in the resistance, an increase in the voltage drop, a degradation in the mechanical properties and a decrease in the service life of the connecting joint.

In order to verify the influence of a ratio of the overlapping area of the functional part 2 and the connecting part 1, to the connection surface area of the connecting part 1 connected to the functional part 2, on the voltage drop (mV) and a drawing force (N), the inventor uses 120 sets of the functional parts 2 and the connecting parts 1 with the same material and structure, which are divided into 12 groups each having 10 sets. Using the same welding machine and tooling, different welding areas are processed on the same connection surface area of the functional part 2 connects to the connecting part 1, so as to test the influence of different ratio of the welding area to the overlapping area of the functional part 2 and the connecting part 1 on the electrical and mechanical properties.

As can be seen from the data in Table 2 below, as the ratio of the welding area to the overlapping area of the functional part 2 and the connecting part 1 increases, the voltage drop performance and the drawing force performance of the corresponding welded joint are improved. When the ratio is less than 5%, the electrical and mechanical properties of the joint are obviously degraded, so the welding area of the joint may be at least 5% of the overlapping area of the functional part 2 and the connecting part 1. Therefore, the inventor sets that the overlapping area of the functional part 2 and the connecting part 1 accounts for 5% to 100% of the connection surface area of the connecting part 1 connected to the functional part 2.

**Table 2: Influence of different welding areas on the voltage drop (mV) and the drawing force (N)**

| No. | Area ratio | Voltage drop (mV) | Drawing force (N) |
|---|---|---|---|
| 1 | 100% | 3.1 | 2160.4 |
| 2 | 90% | 3.1 | 2023.6 |
| 3 | 80% | 3.2 | 1956.9 |
| 4 | 70% | 3.2 | 1950.6 |
| 5 | 60% | 3.3 | 1910.7 |
| 6 | 50% | 3.4 | 1900.8 |
| 7 | 40% | 3.5 | 1892.1 |
| 8 | 30% | 3.6 | 1850.8 |
| 9 | 20% | 3.6 | 1845.3 |
| 10 | 10% | 3.7 | 1825.6 |
| 11 | 5% | 3.8 | 1829.4 |
| 12 | <4% | 4.1 | 1628.8 |

In an example, as illustrated in FIG. 3, the connecting part 1 and the functional part 2 are butt welded, and a welding seam is disposed therebetween.

Specifically, the welding seam is illustrated in the FiG. 3. The connecting part 1 and the functional part 2 are connected mainly by means of laser welding or friction stir welding.

The laser welding is an efficient and precise welding method using a laser light beam with a high energy density as a heat source.

The friction stir welding uses the heat generated by a friction between a welding tool rotating at a high speed and a workpiece, so that a material to be welded is partially melted; and when the welding tool moves forward along a welding interface, the plasticized material flows from the front to the back of the welding tool under the effect of a rotating friction force of the welding tool, and forms a dense solid-phase welding seam under the pressure of the welding tool.

The copper atoms and the aluminum atoms penetrate each other and form a firm metal bond under the effect of pressure, so as to form a welding seam, thereby not only avoiding the galvanic corrosion between copper and aluminum, but also improving the electrical and mechanical properties of the copper-aluminum connection, so that the mechanical and electrical properties of the copper-aluminum composite terminal are significantly improved.

In an embodiment, at least a surface of the aluminum layer 22 is provided with a plating layer.

The surface of the aluminum layer 22 is prone to oxidation when being in contact with air, which increases the contact resistance and reduces the service life, and in severe cases, may lead to heating at a contact position, affect the conduction and even cause accidents. Therefore, by disposing the plating layer on the surface of the aluminum layer 22, it can effectively avoid the oxidation of the aluminum layer 22 and improve the service life of the copper-aluminum composite terminal.

Specifically, the material of the plating layer includes one or more materials selected from the group consisting of zinc, nickel, copper, tin, gold, silver, cadmium, manganese, zirconium, cobalt, titanium, chromium, tin-lead alloy, silver-antimony alloy, palladium, palladium-nickel alloy, graphite silver, graphene silver and silver-gold-zirconium alloy.

The inventor uses the copper-aluminum composite terminals with same specifications and materials but with different plating layer materials, takes the structure of the copper-aluminum composite terminal illustrated in FIG. 3 as an example, and after the connecting part 2 and the connecting part 1 are connected, carries out a series of corrosion resistance time tests. The test results are shown in Table 3.

The corrosion resistance time test in Table 3 is to put a sample into a salt spray test chamber, spray salt mist on all positions on the surface of the aluminum layer 22, take out and clean the sample to observe the surface corrosion at an interval of 20 hours, which is a cycle, stop the test when a corrosion area on the surface of the aluminum layer 22 of the sample is greater than 10% of a total area of the aluminum layer 22, and record the number of cycles at that time. In this embodiment, the number of cycles less than 80 is considered unqualified.

**Table 3: Influence of different plating layers on the corrosion resistance of the surface of the aluminum layer 22**

| Materials of different plating layers | | | | | | | | | |
|---|---|---|---|---|---|---|---|---|---|
| Nickel | Cadmium | Manganese | Zirconium | Cobalt | Tin | Titanium | Zinc | Chrome | Copper |

| Number of cycles of the corrosion resistance test | | | | | | | | | |
|---|---|---|---|---|---|---|---|---|---|
| 89 | 126 | 122 | 130 | 126 | 84 | 126 | 84 | 109 | 127 |
| | | | | | | | | | |

| Materials of different plating layers | | | | | | | | | |
|---|---|---|---|---|---|---|---|---|---|
| Gold | Silver | Silver-antimony alloy | Graphite silver | Graphene silver | Silver-gold-zirconium alloy | Palladium | Palladium-nickel alloy | Tin-lead alloy | Hard silver |

| Number of cycles of the corrosion resistance test | | | | | | | | | |
|---|---|---|---|---|---|---|---|---|---|
| 136 | 128 | 126 | 134 | 127 | 135 | 118 | 125 | 119 | 135 |

As can be seen from Table 3, when the material of the plating layer includes the conventional metals such as tin, nickel and zinc, the test results are not as good as those using other metals, and the test results using other metals far exceed the standard values and achieve relatively stable properties. Therefore, the inventor selects that the material of the plating layer includes one or more materials selected from the group consisting of nickel, cadmium, manganese, zirconium, cobalt, tin, titanium, chromium, copper, gold, silver, zinc, tin-lead alloy, silver-antimony alloy, palladium, palladium-nickel alloy, graphite silver, graphene silver, hard silver and silver-gold-zirconium alloy. Exemplarily, the material of the plating layer includes (or consists of) one or more materials selected from the group consisting of cadmium, manganese, zirconium, cobalt, titanium, chromium, copper, gold, silver, tin-lead alloy, silver-antimony alloy, palladium, palladium-nickel alloy, graphite silver, graphene silver, hard silver and silver-gold-zirconium alloy.

In another embodiment, at least a surface of the copper layer 21 is also provided with a plating layer, and the material of the plating layer includes one or more materials selected from the group consisting of zinc, nickel, copper, tin, gold, silver, cadmium, manganese, zirconium, cobalt, titanium, chromium, tin-lead alloy, silver-antimony alloy, palladium, palladium-nickel alloy, graphite silver, graphene silver and silver-gold-zirconium alloy.

In some embodiments, as illustrated in FIG. 5, at least part of the connecting part 1 is superposed and welded with at least part of the functional part 2.

During the welding of the connecting part 1 and the functional part 2, depending on the actual use environment, it can be ensured that a part of the connecting part 1 is welded with a part of the functional part 2. For example, an upper part is the functional part 2 and a lower part is the connecting part 1, the connecting part 1 is welded to the aluminum layer 22 and the copper layer 21, and the aluminum layer 22 and the copper layer 21 are vertically superposed and welded together, and an upper surface of the connecting part 1 is partially overlapped and welded to the aluminum layer 22 of the functional part 2.

In some embodiments, as illustrated in FIGS. 6, 7 and 8, one of the connecting part 1 and the functional part 2 is provided with a recess 4, and the other is provided with a protrusion 5 matched with the recess 4 for mounting.

Specifically, the connecting part 1 is provided with the recess 4, and the functional part 2 is provided with the protrusion 5, or the connecting part 1 is provided with the protrusion 5, and the connecting part 2 is provided with the recess 4. The connecting part 1 and the functional part 2 are connected by snap-fit connection, so as to increase the contact area and save the materials, at the same time, to ensure the stability of the connection between the connecting part 1 and the functional part 2 and to improve the connection strength.

A snap-fit structure is formed by the mutual engagement of the recess 4 and the protrusion 5 between the connecting part 1 and the functional part 2. On one hand, this structure increases the contact area between the connecting part 1 and the functional part 2, reduces the resistance, and improves the conduction effect. On the other hand, the snap-fit structure also increases the bonding force between the connecting part 1 and the functional part 2, so that the strength of the copper-aluminum terminal is higher, thereby improving the electrical and mechanical properties of the copper-aluminum terminal.

Further, the recess 4 and the protrusion 5 are connected by means of welding or conductive adhesive bonding. By adopting welding or conductive adhesive bonding, the stability of the connection is further improved and the connection strength is increased.

In some embodiments, as illustrated in FIG. 1, the functional part 2 is shaped as a flat plate, which is provided with a through hole 6 or a threaded hole.

By being provided with the through hole 6, the functional part 2 can be connected to the electric device by means of an interference fit, and the functional part 2 is screwed with the electric device through the threaded hole.

In some embodiments, as illustrated in FIG. 9, the functional part 2 is shaped as a cylinder, the copper layer 21 is at least located inside the cylinder, and the cylinder is provided with at least one slot 7 in a longitudinal direction.

The copper layer 21 may be located inside the cylinder, or simultaneously inside and outside the cylinder. Since the functional part 2 is a cylindrical structure, the corresponding electric device may be shaped as a columnar to be plugged with the functional part 2, so as to realize electrical connection. After the functional part 2 is provided with at least one slot 7 in the longitudinal direction, the functional part 2 is expandable and contractable. When being plugged with the electric device, the functional part 2 is adaptive to the processing error of the electric device, and increases the binding force between the functional part 2 and the electric device, so as to ensure more contact area, and achieve better electrical and mechanical properties, thereby not only achieving the effective contact and connection, but also effectively reducing the hidden dangers of electric shock casualties and device damages caused by the poor structure of the electric device.

In some embodiments, as illustrated in FIGS. 1, 4 and 5, the connecting part 1 is a flat plate structure or a cylindrical structure or a U-shaped open structure or a V-shaped open structure. By designing the connecting part 1 into different shapes, the aluminum terminal can be connected to the aluminum cable 3 in different connection modes according to actual needs. By this way the technological structure of the electric product is optimized, the processing time is shortened, and the production and operation cost is reduced.

In some embodiments, the connecting part 1 and the conductive portion of the aluminum cable 3 are connected by means of crimping, welding or bonding.

In order to adapt to the connection with the aluminum cable 3, the connecting part 1 may be connected to the aluminum cable in different connection modes according to actual needs, and it is also possible to optimize the technological structure of the electric product, shorten the processing time, and reduce the production and operation cost.

When being a flat plate structure, as illustrated in FIG. 1, the connecting part 1 is usually connected to the aluminum cable 3 by means of welding or conductive adhesive bonding. Due to the small volume of the connecting zone between the connecting part 1 and the aluminum cable 3, it is suitable for the situation of a small mounting space.

Alternatively, as illustrated in FIG. 5, the cross-sectional shape of the connecting part 1 is a U-shaped or V-shaped open structure, and the aluminum cable 3 is generally connected by means of curl crimping, that is, both sides of the U-shaped or V-shaped connecting part 1 are curl, flipped, butted and crimped into a core wire of the aluminum cable. Since the connecting part 1 is tightly crimped with the aluminum cable 3, there is a large contact area between the connecting part 1 and the aluminum cable 3, thereby achieving a good electrical conductivity and high mechanical properties.

Alternatively, as illustrated in FIG. 4, the connecting part 1 is a cylindrical structure, wherein the aluminum cable 3 is inserted into a cylinder, and then the aluminum cable 3 and the connecting part 1 are connected together by means of crimping, welding or conductive adhesive coating. The connection is stable, the contact area is large, the electrical conductivity and mechanical properties of the electrical connector are good, and the structure is a closed structure. As a result, the connecting part 1 may not be cracked or broken due to the harsh mounting environment, thereby greatly reducing the possibility of loosening between the connecting part 1 and the aluminum cable 3, and improving the reliability and the service life of the connection.

Specifically, the aluminum layer 22 is connected to the connecting part 1, and the copper layer 21 is connected to the electric device.

When the copper-aluminum composite terminal is connected to the electric device, as illustrated in FIGS. 3 and 5, as the electric device is generally made of copper, when the connecting part 1 is made of aluminum, in order to ensure the stability of the electrical connection and avoid a potential difference, the aluminum layer 22 is partially connected to the connecting part 1, and the copper layer 21 is partially connected to the electric device.

In an embodiment, a copper-aluminum transition layer is disposed between the copper layer 21 and the aluminum layer 22.

The copper-aluminum transition layer is disposed on a connection surface of the copper layer 21 and the aluminum layer 22. Under the effect of heat and pressure, the copper atoms and the aluminum atoms penetrate or bond each other to form a copper-aluminum transition layer, thereby not only avoiding the galvanic corrosion between copper and aluminum, but also improving the electrical and mechanical properties of the copper-aluminum connection, so that the mechanical and electrical properties of the copper-aluminum composite terminal are significantly improved.

It should be noted that the copper-aluminum transition layer at least includes pure copper, pure aluminum, a copper-aluminum solid solution and a copper-aluminum compound. The copper-aluminum compound includes one or more materials selected from the group consisting of Cu₂Al, Cu₃Al₂, CuAl and CuAl₂.

In an embodiment, the copper-aluminum transition layer includes the copper-aluminum solid solution not less than 6.5wt%.

When the copper-aluminum transition layer includes the copper-aluminum solid solution less than 6.5wt%, other components in the transition layer are more than 93.5wt%. When pure copper and pure aluminum account for large proportions in the copper-aluminum transition layer, it means that the welding of copper and aluminum is insufficient and the pure copper and the pure aluminum are not fused to form the copper-aluminum solid solution. When the copper-aluminum compound accounts for a large proportion in the copper-aluminum transition layer, it means that the copper-aluminum compound has a very poor electrical conductivity and is brittle, and the mechanical and electrical properties of the copper-aluminum composite terminal may be degraded. Therefore, the copper-aluminum transition layer of the present disclosure includes the copper-aluminum solid solution of at least 6.5wt%.

In order to verify the influence of different proportions of copper-aluminum solid solutions in the copper-aluminum transition layer of the functional part on the drawing force and the voltage drop of the copper-aluminum composite terminals, the drawing forces, the voltage drops and the welding strengths of the copper-aluminum composite terminals with different proportions of copper-aluminum solid solutions in the copper-aluminum transition layers are investigated, and the results are shown in Table 4.

**Table 4: Influence of the proportion of the copper-aluminum solid solution in the copper-aluminum transition layer on the drawing force and the voltage drop of the copper-aluminum composite terminal**

| No. | Proportion of the copper-aluminum solid solution in the copper-aluminum transition layer (wt%) | | | | | | | | | | | | | |
|---|---|---|---|---|---|---|---|---|---|---|---|---|---|---|
| | 5.5 | 6.5 | 8.5 | 12.5 | 15 | 25 | 35 | 45 | 55 | 65 | 75 | 85 | 90 | 95 |
| 1 | Drawing force of the copper-aluminum composite terminal (N) | | | | | | | | | | | | | |
| | 1520 | 2080 | 2260 | 2588 | 2886 | 3075 | 3218 | 3578 | 3735 | 3929 | 4164 | 4425 | 4568 | 4616 |
| 2 | Voltage drop of the copper-aluminum composite terminal | | | | | | | | | | | | | |
| | 0.69 | 0.49 | 0.46 | 0.40 | 0.38 | 0.35 | 0.32 | 0.28 | 026 | 0.23 | 0.19 | 0.18 | 0.16 | 0.14 |

As can be seen from the above table, when the copper-aluminum solid solution included in the copper-aluminum transition layer of the functional part 2 is less than 6.5wt%, the drawing force of the copper-aluminum composite terminal is obviously reduced, and the voltage drop of the copper-aluminum composite terminal is obviously increased, which cannot meet the requirements of the mechanical and electrical properties of the copper-aluminum composite terminal. As the proportion of the copper-aluminum solid solution included in the copper-aluminum transition layer is gradually increased, the mechanical property and electrical property of the copper-aluminum composite terminal are gradually improved. Therefore, the inventor sets that the transition layer includes the copper-aluminum solid solution not less than 6.5wt%.

In an embodiment, the copper-aluminum transition layer includes the copper-aluminum compound not more than 50.5 wt %.

The total weight proportion of the copper-aluminum compound is an important factor that influences the connectivity and the electrical conductivity of the copper layer 21 and the aluminum layer 22. Due to the large brittleness and high resistivity of the copper-aluminum compound, it is found in the researches of the present disclosure that the stress concentration is easy to occur around the copper-aluminum compound, which leads to cracks, thereby degrading the mechanical strength and the electrical properties of the copper-aluminum composite terminal. It is found in a large number of tests that as the total weight proportion of the copper-aluminum compound in the copper-aluminum transition layer increases, the internal stress is more concentrated. When the total weight proportion of the copper-aluminum compound in a copper-aluminum mixture is lower than a critical value, the mechanical strength and the electrical property of the copper-aluminum composite terminal meet the performance requirements. But when the total weight proportion of the copper-aluminum compound in copper-aluminum mixture is higher than the critical value, the performance degrades sharply, and the mechanical strength and the electrical property of the copper-aluminum composite terminal no longer meet the requirements. In the present disclosure, the total weight proportion of the copper-aluminum compound in the copper-aluminum transition layer should be controlled not to exceed 50.5%.

**Table 5: Influence of the total weight proportion of the copper-aluminum compound in the copper-aluminum transition layer on the peeling force and the voltage drop of the copper-aluminum composite terminal**

| Total weight proportions of different copper-aluminum compounds in the copper-aluminum transition layer (%) | | | | | | | | | | | | | | | | |
|---|---|---|---|---|---|---|---|---|---|---|---|---|---|---|---|---|
| 1 | 5 | 10 | 15 | 20 | 30.5 | 33.5 | 35.5 | 40.5 | 50.5 | 55.5 | 60 | 65 | 70 | 75 | 80 | 85 |

| Peeling force of the aluminum layer from the copper layer (N) | | | | | | | | | | | | | | | | |
|---|---|---|---|---|---|---|---|---|---|---|---|---|---|---|---|---|
| 550 | 519 | 497 | 454 | 418 | 386 | 352 | 306 | 284 | 212 | 183 | 164 | 148 | 132 | 116 | 101 | 96 |

| Voltage drop of the copper-aluminum composite terminal (N) | | | | | | | | | | | | | | | | |
|---|---|---|---|---|---|---|---|---|---|---|---|---|---|---|---|---|
| 0.10 | 0.16 | 0.20 | 0.27 | 0.30 | 0.36 | 0.39 | 0.41 | 0.45 | 0.47 | 0.53 | 0.59 | 0.64 | 0.70 | 0.75 | 0.83 | 0.88 |

As can be seen from the above Table 5, when the total weight proportion of the copper-aluminum compound in the copper-aluminum transition layer of the functional part 2 gradually increases from 1%, due to the large brittleness and the high resistivity of the copper-aluminum compound, the peeling force of the aluminum layer 22 from the copper layer 21 gradually decreases and the voltage drop of the copper-aluminum composite terminal gradually increases. It is found in a large number of tests that when the total weight proportion of the copper-aluminum compound in the copper-aluminum transition layer is 50.5%, the initial mechanical and electrical properties of the copper-aluminum composite terminal can meet the requirements. When the total weight proportion of the copper-aluminum compound in the copper-aluminum mixture layer increases, the mechanical and electrical properties of the copper-aluminum composite terminal cannot meet the standard values, and will be increasingly degraded. Therefore, the inventor sets the total weight proportion of the copper-aluminum compound in the copper-aluminum transition layer to not exceed 50.5%.

Although some particular embodiments of the present disclosure have been described in detail by examples, it should be understood by those skilled in the art that the above examples are only for illustration and are not intended to limit the scope of the present disclosure. It should be understood by those skilled in the art that the above embodiments can be modified without departing from the scope of the present disclosure. The scope of the present disclosure is defined by the appended claims.

## Claims

1. A copper-aluminum composite terminal configured to electrically connect an aluminum cable (3) to an electric device and serve to conduct current, the copper-aluminum composite terminal comprises a connecting part (1) and a functional part (2) which are connected to each other, the connecting part (1) is made of aluminum, the functional part (2) is composed of a copper layer (21) and an aluminum layer (22), the connecting part (1) is connectable to a conductive portion of the aluminum cable (3), and the copper layer (21) of the functional part (2) is connectable to the electric device; the copper layer (21) and the aluminum layer (22) are laminated and welded into a single structure; wherein there are two copper layers (21), each disposed on one side of the aluminum layer (22), and the copper layers (21) are superposed and welded together with the aluminum layer (22);
**characterized in that**
the functional part (2) is in lap connection with the connecting part (1), and **in that**
one of the connecting part (1) and the functional part (2) is provided with a recess (4), and the other is provided with a protrusion (5) matched with the recess (4) for mounting, wherein the recess and the protrusion are connected by means of welding or conductive adhesive bonding.

2. The copper-aluminum composite terminal according to claim 1, wherein the copper layer (21) and the aluminum layer (22) are welded by means of diffusion welding, pressure welding, accumulative roll bonding, electromagnetic welding, ultrasonic welding, or explosive welding.

3. The copper-aluminum composite terminal according to claim 1, wherein a thickness of the copper layer (21) accounts for 0.1% to 100% of a thickness of the aluminum layer (22).

4. The copper-aluminum composite terminal according to claim 1, wherein the aluminum layer (22) is connected to the connecting part (1), and the copper layer (21) is connected to the electric device ; preferably wherein an overlapping area of the aluminum layer (22) and the connecting part (1) accounts for 5% to 100% of an overlapping area on the connecting part (1)'s interface with the aluminum layer (22).

5. The copper-aluminum composite terminal according to claim 1, wherein at least a surface of the aluminum layer (22) is provided with a plating layer; preferably wherein the material of the plating layer comprises one or more materials selected from the group consisting of zinc, nickel, copper, tin, gold, silver, cadmium, manganese, zirconium, cobalt, titanium, chromium, tin-lead alloy, silver-antimony alloy, palladium, palladium-nickel alloy, graphite silver, graphene silver and silver-gold-zirconium alloy.

6. The copper-aluminum composite terminal according to claim 1, wherein the recess and the protrusion are connected by means of welding or conductive adhesive bonding.

7. The copper-aluminum composite terminal according to claim 1, wherein the functional part (2) is shaped as a flat plate, and the flat plate is provided with a through hole (6) or a threaded hole.

8. The copper-aluminum composite terminal according to claim 1, wherein the functional part (2) is shaped as a cylinder, and the copper layer (21) is at least located inside the cylinder;
preferably wherein the cylinder is provided with at least one slot (7) in a longitudinal direction.

9. The copper-aluminum composite terminal according to claim 1, wherein the connecting part (1) is a flat plate structure or a cylindrical structure or a U-shaped open structure or a V-shaped open structure.

10. The copper-aluminum composite terminal according to claim 1, wherein the connecting part (1) and the conductive portion of the aluminum cable (3) are connectable by means of crimping or welding or bonding or riveting.

11. The copper-aluminum composite terminal according to claim 1, wherein a copper-aluminum transition layer is disposed between the copper layer (21) and the aluminum layer (22).

12. The copper-aluminum composite terminal according to claim 11, wherein the copper-aluminum transition layer comprises a copper-aluminum solid solution not less than 6.5wt%; or wherein the copper-aluminum transition layer comprises a copper-aluminum compound not more than 50.5 wt %.

## Patentansprüche

1. Kupfer-Aluminium-Verbundanschluss, der so ausgebildet ist, dass er ein Aluminiumkabel (3) elektrisch mit einem elektrischen Gerät verbindet und dazu dient, Strom zu leiten, wobei der Kupfer-Aluminium-Verbundanschluss ein Verbindungsteil (1) und ein Funktionsteil (2) aufweist, die miteinander verbunden sind, wobei das Verbindungsteil (1) aus Aluminium besteht, das Funktionsteil (2) aus einer Kupferschicht (21) und einer Aluminiumschicht (22) besteht, wobei das Verbindungsteil (1) mit einem leitfähigen Abschnitt des Aluminiumkabels (3) verbindbar ist und die Kupferschicht (21) des Funktionsteils (2) mit dem elektrischen Gerät verbindbar ist; die Kupferschicht (21) und die Aluminiumschicht (22) laminiert und zu einer einzigen Struktur verschweißt sind; wobei zwei Kupferschichten (21) vorhanden sind, die jeweils auf einer Seite der Aluminiumschicht (22) angeordnet sind, und die Kupferschichten (21) übereinanderliegen und mit der Aluminiumschicht (22) verschweißt sind;
**dadurch gekennzeichnet, dass**
das Funktionsteil (2) mit dem Verbindungsteil (1) in einer Überlappungsverbindung steht, und dass
entweder das Verbindungsteil (1) oder das Funktionsteil (2) mit einer Aussparung (4) versehen ist und das andere Teil zur Befestigung mit einem zur Aussparung (4) passenden Vorsprung (5) versehen ist, wobei die Aussparung und der Vorsprung durch Schweißen oder leitfähiges Kleben miteinander verbunden sind.

2. Kupfer-Aluminium-Verbundanschluss gemäß Anspruch 1, bei dem die Kupferschicht (21) und die Aluminiumschicht (22) mittels Diffusionsschweißen, Druckschweißen, kumulativem Walzschweißen, elektromagnetischem Schweißen, Ultraschallschweißen oder Explosionsschweißen verschweißt sind.

3. Kupfer-Aluminium-Verbundanschluss gemäß Anspruch 1, bei dem die Dicke der Kupferschicht (21) 0,1 % bis 100 % der Dicke der Aluminiumschicht (22) beträgt.

4. Kupfer-Aluminium-Verbundanschluss gemäß Anspruch 1, bei dem die Aluminiumschicht (22) mit dem Verbindungsteil (1) verbunden ist und die Kupferschicht (21) mit dem elektrischen Gerät verbunden ist; vorzugsweise bei dem ein Überlappungsbereich der Aluminiumschicht (22) und des Verbindungsteils (1) 5 % bis 100 % eines Überlappungsbereichs an der Grenzfläche des Verbindungsteils (1) zur Aluminiumschicht (22) ausmacht.

5. Kupfer-Aluminium-Verbundanschluss gemäß Anspruch 1, bei dem zumindest eine Oberfläche der Aluminiumschicht (22) mit einer Beschichtungsschicht versehen ist; vorzugsweise bei dem das Material der Beschichtungsschicht ein oder mehrere Materialien umfasst, die aus der Gruppe ausgewählt sind, bestehend aus Zink, Nickel, Kupfer, Zinn, Gold, Silber, Cadmium, Mangan, Zirkonium, Kobalt, Titan, Chrom, einer Zinn-Blei-Legierung, einer Silber-Antimon-Legierung, Palladium, einer Palladium-Nickel-Legierung, Graphit-Silber, Graphen-Silber und einer Silber-Gold-Zirkonium-Legierung.

6. Kupfer-Aluminium-Verbundanschluss gemäß Anspruch 1, bei dem die Aussparung und der Vorsprung durch Schweißen oder leitfähiges Kleben miteinander verbunden sind.

7. Kupfer-Aluminium-Verbundanschluss gemäß Anspruch 1, bei dem der Funktionsteil (2) als flache Platte ausgebildet ist und die flache Platte mit einem Durchgangsloch (6) oder einem Gewindeloch versehen ist.

8. Kupfer-Aluminium-Verbundanschluss gemäß Anspruch 1, bei dem der Funktionsteil (2) als Zylinder ausgebildet ist und sich die Kupferschicht (21) zumindest im Inneren des Zylinders befindet;
vorzugsweise wobei der Zylinder in Längsrichtung mit mindestens einem Schlitz (7) versehen ist.

9. Kupfer-Aluminium-Verbundanschluss nach Anspruch 1, bei dem das Verbindungsteil (1) eine flache Plattenkonstruktion oder eine zylindrische Konstruktion oder eine U-förmige offene Konstruktion oder eine V-förmige offene Konstruktion ist.

10. Kupfer-Aluminium-Verbundanschluss gemäß Anspruch 1, bei dem der Verbindungsteil (1) und der leitende Abschnitt des Aluminiumkabels (3) durch Crimpen, Schweißen, Kleben oder Nieten miteinander verbunden werden können.

11. Kupfer-Aluminium-Verbundanschluss nach Anspruch 1, bei dem zwischen der Kupferschicht (21) und der Aluminiumschicht (22) eine Kupfer-Aluminium-Übergangsschicht angeordnet ist.

12. Kupfer-Aluminium-Verbundanschluss gemäß Anspruch 11, bei dem die Kupfer-Aluminium-Übergangsschicht eine Kupfer-Aluminium-Mischkristalllösung von nicht weniger als 6,5 Gew.-% aufweist; oder bei dem die Kupfer-Aluminium-Übergangsschicht eine Kupfer-AluminiumVerbindung von nicht mehr als 50,5 Gew.-% aufweist.

## Revendications

1. Borne en composite cuivre-aluminium conçu pour relier électriquement un câble en aluminium (3) à un appareil électrique et servant à conduire le courant, la borne en composite cuivre-aluminium comportant une partie de connexion (1) et une partie fonctionnelle (2) qui sont reliées l'une à l'autre, la partie de connexion (1) étant en aluminium, la partie fonctionnelle (2) étant constituée d'une couche de cuivre (21) et d'une couche d'aluminium (22), la partie de connexion (1) pouvant être reliée à une section conductrice du câble en aluminium (3) et la couche de cuivre (21) de la partie fonctionnelle (2) peut être reliée à l'appareil électrique; la couche de cuivre (21) et la couche d'aluminium (22) sont stratifiées et soudées pour former une structure unique; deux couches de cuivre (21) étant présentes, disposées chacune d'un côté de la couche d'aluminium (22), et les couches de cuivre (21) se superposant et étant soudées à la couche d'aluminium (22); **caractérisé en ce que**
la partie fonctionnelle (2) est assemblée à la partie de connexion (1) par un assemblage à chevauchement, et que
soit la partie de connexion (1) et soit la partie fonctionnelle (2) est pourvue d'un évidement (4) et l'autre partie est pourvue, pour la fixation, d'une saillie (5) adaptée à l'évidement (4), l'évidement et la saillie étant assemblés par soudage ou par collage conducteur.

2. Borne en composite cuivre-aluminium selon la revendication 1, dans laquelle la couche de cuivre (21) et la couche d'aluminium (22) sont assemblées par soudage par diffusion, soudage sous pression, soudage par laminage cumulatif, soudage électromagnétique, soudage par ultrasons ou par soudage par explosion.

3. Borne en composite cuivre-aluminium selon la revendication 1, dans laquelle l'épaisseur de la couche de cuivre (21) est comprise entre 0,1 % et 100 % de l'épaisseur de la couche d'aluminium (22).

4. Borne en composite cuivre-aluminium selon la revendication 1, dans laquelle la couche d'aluminium (22) est reliée à la partie de connexion (1) et la couche de cuivre (21) est reliée à l'appareil électrique; de préférence, dans laquelle une zone de chevauchement de la couche d'aluminium (22) et de la partie de connexion (1) représente entre 5 % et 100 % d'une zone de chevauchement au niveau de l'interface entre la partie de connexion (1) et la couche d'aluminium (22).

5. Borne en composite cuivre-aluminium selon la revendication 1, dans laquelle au moins une surface de la couche d'aluminium (22) est pourvue d'une couche de revêtement; de préférence, dans lequel le matériau de la couche de revêtement comprend un ou plusieurs matériaux choisis parmi le groupe constitué du zinc, du nickel, du cuivre, de l'étain, de l'or, de l'argent, du cadmium, manganèse, zirconium, cobalt, titane, chrome, un alliage étain-plomb, un alliage argent-antimoine, palladium, un alliage palladium-nickel, graphite-argent, graphène-argent et un alliage argent-alliage or-zirconium.

6. Borne en composite cuivre-aluminium selon la revendication 1, dans laquelle l'évidement et la saillie sont reliés entre eux par soudage ou par collage conducteur.

7. Borne en composite cuivre-aluminium selon la revendication 1, dans laquelle la partie fonctionnelle (2) est réalisée sous la forme d'une plaque plate et la plaque plate est pourvue d'un trou traversant (6) ou d'un trou fileté.

8. Borne en composite cuivre-aluminium selon la revendication 1, dans laquelle la partie fonctionnelle (2) est réalisée sous la forme d'un cylindre et la couche de cuivre (21) se trouve au moins à l'intérieur du cylindre; de préférence, le cylindre étant muni, dans le sens longitudinal, d'au moins une fente (7).

9. Borne en composite cuivre-aluminium selon la revendication 1, dans laquelle la partie de connexion (1) présente une structure en plaque plate, une structure cylindrique, une structure ouverte en forme de U ou une structure ouverte en forme de V.

10. Borne en composite cuivre-aluminium selon la revendication 1, dans laquelle la partie de connexion (1) et la partie conductrice du câble en aluminium (3) peuvent être reliés entre eux par sertissage, soudage, collage ou rivetage.

11. Borne en composite cuivre-aluminium selon la revendication 1, dans laquelle une couche de transition cuivre-aluminium est disposée entre la couche de cuivre (21) et la couche d'aluminium (22).

12. Borne en composite cuivre-aluminium selon la revendication 11, dans laquelle la couche de transition cuivre-aluminium est constituée d'une solution de cristaux mixtes cuivre-aluminium contenant au moins 6,5 % en poids; ou dans laquelle la couche de transition cuivre-aluminium contient un composé cuivre-aluminium à hauteur de 50,5 % en poids au maximum.
